# EUROPEAN PATENT SPECIFICATION

(11) **EP 3 076 561 B1**
(45) Date of publication and mention of the grant of the patent: **26.08.2020**
(21) Application number: 16163063.7
(22) Date of filing: 31.03.2016
(51) Int. Cl.: H04B 5/00, H04W 4/80

(54) **SYSTEM AND METHOD OF NEAR FIELD COMMUNICATION ENABLED DEVICE PROGRAMMING**
SYSTEM UND VERFAHREN ZUR PROGRAMMIERUNG EINER NAHFELDKOMMUNIKATIONSFÄHIGEN VORRICHTUNG
SYSTÈME ET PROCÉDÉ DE PROGRAMMATION DE DISPOSITIF ACTIVÉ EN COMMUNICATION EN CHAMP PROCHE

(30) Priority: 01.04.2015 US 201514676231
(43) Date of publication of application: 05.10.2016
(73) Proprietor: Honeywell International Inc., Morris Plains, NJ 07950 (US)
(72) Inventor: BEREZOWSKI, Andrew G., Morris Plains, NJ New Jersey 07950 (US); KORE, Vinayak Sadashiv, Morris Plains, NJ New Jersey 07950 (US); OTIS, Jesse J., Morris Plains, NJ New Jersey 07950 (US)
(74) Representative: Houghton, Mark Phillip

(56) References cited:
- US-A1- 2010 013 600
- US-A1- 2013 005 249
- US-A1- 2014 045 423
- US-A1- 2014 170 971

## Description

### FIELD

The present invention relates generally to fire alarm and security system peripheral devices. More particularly, the present invention relates to a system and method of near field communication enabled programming of such peripheral devices.

### BACKGROUND

Peripheral devices in fire alarm and security systems must be configured. However, known configuration systems and methods require system power and a programming device or mechanical switch to configure the peripheral device. This is often undesirable.

In view of the above, there is a continuing, ongoing need for an improved system and method to configure or program peripheral devices.

US 2014/0170971 A1 discloses a NFC communication device.

### SUMMARY OF THE INVENTION

The present invention is defined by the appended claims.

### BRIEF DESCRIPTION OF THE DRAWINGS

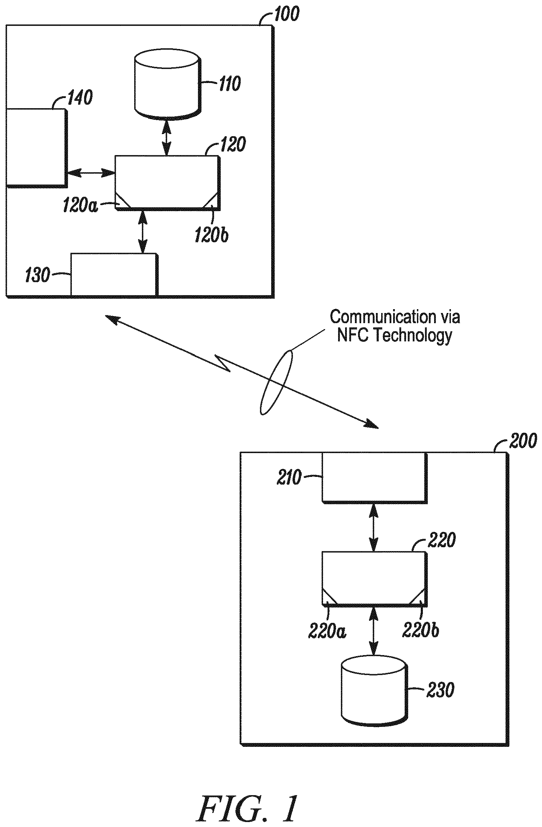

FIG. 1 is a block diagram of a peripheral device in communication with a near field configuration device in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein include a system and method of near field communication enabled programming of peripheral devices in fire alarm and security systems. In some embodiments, the systems and methods disclosed herein can securely configure and program a peripheral device without the need for system power or mechanical switches. Accordingly, the systems and methods disclosed herein can reduce cost and provide benefits that include, but are not limited to, fast configuration, automated configuration, increased access to information, downloaded software applications, and initial configuration of a device during production. For example, in some embodiments, a single peripheral device with a single SKU can be configured in one of a plurality of different ways without the need for a powered fixture.

In accordance with the systems and methods disclosed herein, in some embodiments, a peripheral device can be configured without removing the device from its packaging carton, a peripheral device can provide visual feedback of configuration information, a peripheral device can be configured without applying system power, all or a portion of a peripheral device can be powered using near field communication (NFC) technology, a memory device in a peripheral device can be used to store or read configuration data, and/or a microcontroller in a peripheral device can receive power to configure or read the device's memory.

In some embodiments, a peripheral device as disclosed herein can include at least a memory device, a microcontroller, and a near field communication interface. For example, the near field communication interface can harvest or receive energy or power for powering the device during device configuration or programming. That is, the peripheral device need not include or receive switches, system power, or battery power for device configuration or programming.

In some embodiments, a peripheral device as disclosed herein can include a display device, for example, an electronic paper display or other indicator that can display a static text, image, and/or color indefinitely without using electricity. In some embodiments, such a display device can be visible while the peripheral device is contained within its packaging carton and in some embodiments, the information on the display device can include configuration information and feedback.

In some embodiments of operation, a near field configuration device can be placed within a predetermined distance of a peripheral device as disclosed herein and can communicate with the peripheral device using near field communication technology. While in communication, the near field configuration device can provide power to the peripheral device, via the near field communication, for configuring the device. Accordingly, the near field configuration device can communicate with the peripheral device with or without opening the peripheral device's packaging carton and with or without applying system or battery power to the peripheral device.

In some embodiments, the near field configuration device can be used to perform any or all of the following exemplary configuration functions on the peripheral device, without limitation: setting the peripheral device address, assigning the peripheral device to a group or zone, assigning control of the peripheral device by event functions, assigning peripheral device output power levels, assigning peripheral device output functions, assigning peripheral device input functions, assigning peripheral device wiring configuration, and/or setting peripheral device detection thresholds and sensitivities.

In some embodiments, the near field configuration device can include any or all of the following exemplary software applications or programmed algorithms that can be executed during configuration of the peripheral device, without limitation: automatically incrementing the target device address, for example, the peripheral device address, when moving from one device to the next, and/or automatically assigning location information, zone information, or wireless mesh parent child relationships.

In some embodiments, the near field configuration device can receive or extract data from the peripheral device with which the configuration device is communicating. For example, extracted information can be used for diagnostic purposes or to perform real-time diagnostic testing on the peripheral device.

In some embodiments, one or both of the near field configuration device and the peripheral device can include a software application with a security feature for limiting access to the peripheral device to one or a particular group of configuration devices following initial configuration of the peripheral device. In some embodiments, the near field configuration device can contain a software application that enables the grouping of peripheral devices so that a group of peripheral devices can be mapped to one or more groups of system devices.

FIG. 1 is a block diagram of a peripheral device 100 in communication with a near field configuration device 200 in accordance with disclosed embodiments. As seen in FIG. 1, the peripheral device 100 can include at least a memory device 110, control circuitry 120, for example, a microcontroller, a near field communication interface 130, and, optionally, a display device 140, for example, an electronic paper display. However, it is to be understood that the peripheral device 100 can include other elements as known to be included in peripheral devices known in the art.

The control circuitry 120 can include one or more programmable processors 120a and executable control software 120b as would be understood by one of ordinary skill in the art. The executable control software 120b can be stored on a transitory or non-transitory computer readable medium, including, but not limited to, local computer memory, RAM, optical storage media, magnetic storage media, flash memory, and the like.

As seen in FIG. 1, the peripheral device 100 can communicate with the near field configuration device 200 via near field communication technology. The near field configuration device 200 can include at least a near field communication interface 210, control circuitry 220, for example, a microcontroller, and a memory device 230. The control circuitry 220 can include one or more programmable processors 220a and executable control software 220b as would be understood by one of ordinary skill in the art. The executable control software 220b can be stored on a transitory or non-transitory computer readable medium, including, but not limited to, local computer memory, RAM, optical storage media, magnetic storage media, flash memory, and the like.

In some embodiments, the executable control software 120b can include software applications or programmed algorithms that can be executed during communication with the near field configuration device 200, for example, when the peripheral device 100 is being powered via the near field communication with the configuration device 200. Similarly, in some embodiments, the executable control software 220b can include software applications or programmed algorithms that can be executed during communication with and configuration of the peripheral device 100. Furthermore, in some embodiments, the executable control software 220b can include software applications that can be transmitted or downloaded to the peripheral device 100 when the near field configuration device 200 is communicating with the peripheral device 100. In some embodiments, such software applications or programmed algorithms can include instructions on grouping devices.

When communicating via near field communication technology, the near field configuration device 200 can transmit a signal, via the communication interface 210, to the peripheral device 100, which can receive the signal, via the communication interface 130, and extract power therefrom. For example, upon receiving the signal from the near field configuration device 200, all or a portion of the peripheral device 100, for example, at least the control circuitry 120, can be powered by the signal and the contents thereof.

The signal received from the near field configuration device 200 can include configuration data, information, or instructions, and in some embodiments, the peripheral device 100 can store such configuration data, information, or instructions in the memory device 110. Furthermore, upon such receipt or storage, the display device 140 can display a predetermined indicator regarding the configuration status of the peripheral device 100.

In some embodiments, the peripheral device 100 can also transmit a signal, via the communication interface 130, to the near field configuration device 200 to provide the configuration device 200, via the communication interface 210, with diagnostic information regarding the peripheral device 100 and the configuration thereof. In some embodiments, the peripheral device 100 can transmit the signal with such information responsive to the near field configuration device 200 or a signal or instructions received therefrom.

In some embodiments, the executable control software 120b and/or the executable control software 220b can include a security feature as explained above.

Although a few embodiments have been described in detail above, other modifications are possible. For example, the logic flows described above do not require the particular order described, or sequential order, to achieve desirable results. Other steps may be provided, or steps may be eliminated, from the described flows, and other components may be added to, or removed from, the described systems. Other embodiments may be within the scope of the invention.

From the foregoing, it will be observed that numerous variations and modifications may be effected without departing from the scope of the invention as defined by the appended claims.

## Claims

1. A peripheral device for a fire alarm system or a security system, the peripheral device comprising:
a near field communication interface (130); and
control circuitry (120) of the peripheral device in communication with the near field communication interface,
wherein the near field communication interface receives a first near field communication signal,
wherein the control circuitry is powered via power in the first near field communication signal,
wherein the control circuity is configured via configuration data in the first near field communication signal,
wherein the peripheral device includes a software application with a security feature for limiting access to the peripheral device to a particular group of configuration devices following the configuration of the peripheral device,
wherein the near field communication interface receives a second near field communication signal, and
wherein the second near field communication signal causes the control circuitry to transmit diagnostic information regarding the control circuitry and configuration thereof via the near field communication interface.

2. The peripheral device of claim 1 further comprising a display device (140) for displaying an indicator of configuration status.

3. The peripheral device of claim 2 wherein the display device (140) includes an electronic paper display device.

4. The peripheral device of claim 1 wherein the control circuitry (120) includes a microcontroller.

5. The peripheral device of claim 1 wherein the control circuitry (120) includes a programmable processor (220) and executable control software stored on a non-transitory computer readable medium, and wherein at least some of the executable control software is executed while the near field communication interface receives the first near field communication signal.

6. The peripheral device of claim 1 further comprising a memory device (110), wherein the control circuitry (120) stores the configuration data contained in the first near field communication signal in the memory device.

7. The peripheral device of claim 1 wherein, absent the near field communication interface (130) receiving the first near field communication signal, the control circuitry remains unpowered.

8. A near field configuration device comprising:
a near field communication interface (130); and
control circuitry (120) in communication with the near field communication interface,
wherein the control circuitry instructs the near field communication interface to transmit a first near field communication signal to a displaced peripheral device,
wherein the first near field communication signal includes power to power the displaced peripheral device,
wherein the first near field communication signal includes configuration data to configure the displaced peripheral device,
wherein the near field configuration device includes a software application with a security feature for limiting access to the displaced peripheral device to a particular group of configuration devices following initial configuration of the displaced peripheral device,
wherein the control circuitry instructs the near field communication interface to transmit a second near field communication signal to the displaced peripheral device, and
wherein the second near field communication signal includes instructions for the displaced peripheral device to transmit diagnostic information regarding the displaced peripheral device and configuration thereof to the near field communication interface.

9. The near field configuration device of claim 8 wherein the first near field communication signal includes power for powering at least control circuitry (120) of the displaced peripheral device.

10. The near field configuration device of claim 9 wherein the control circuitry (120) of the displaced peripheral device includes a microcontroller.

11. The near field configuration device of claim 9 wherein the control circuitry (120) of the displaced peripheral device includes a programmable processor (120) and executable control software stored on a non-transitory computer readable medium, and wherein the first near field communication signal includes the power for powering execution of at least some of the executable control software.

12. The near field configuration device of claim 8 wherein the first near field communication signal includes peripheral device data, information, or instructions for the configuration of the displaced peripheral device.

13. The near field configuration device of claim 9 wherein the first near field communication signal includes one or more software applications for storage in a memory device (110) of the displaced peripheral device.

## Patentansprüche

1. Peripherievorrichtung für ein Brandmeldesystem oder ein Sicherheitssystem, wobei die Peripherievorrichtung umfasst:
eine Nahfeldkommunikationsschnittstelle (130); und
Steuerschaltung (120) der Peripherievorrichtung in Kommunikation mit der Nahfeldkommunikationsschnittstelle,
wobei die Nahfeldkommunikationsschnittstelle ein erstes Nahfeldkommunikationssignal empfängt,
wobei die Steuerschaltung mittels Strom im ersten Nahfeldkommunikationssignal versorgt wird,
wobei die Steuerschaltung mittels Konfigurationsdaten im ersten Nahfeldkommunikationssignal konfiguriert ist,
wobei die Peripherievorrichtung eine Softwareanwendung mit einem Sicherheitsmerkmal zum Beschränken des Zugriffs auf die Peripherievorrichtung auf eine bestimmte Gruppe von Konfigurationsvorrichtungen nach der Konfiguration der Peripherievorrichtung einschließt,
wobei die Nahfeldkommunikationsschnittstelle ein zweites Nahfeldkommunikationssignal empfängt, und
wobei das zweite Nahfeldkommunikationssignal bewirkt, dass die Steuerschaltung Diagnoseinformationen bezüglich der Steuerschaltung und der Konfiguration davon mittels der Nahfeldkommunikationsschnittstelle überträgt.

2. Peripherievorrichtung nach Anspruch 1, ferner umfassend eine Anzeigevorrichtung (140) zum Anzeigen eines Indikators des Konfigurationsstatus.

3. Peripherievorrichtung nach Anspruch 2, wobei die Anzeigevorrichtung (140) eine elektronische Papieranzeigevorrichtung einschließt.

4. Peripherievorrichtung nach Anspruch 1, wobei die Steuerschaltung (120) einen Mikrocontroller einschließt.

5. Peripherievorrichtung nach Anspruch 1, wobei die Steuerschaltung (120) einen programmierbaren Prozessor (220) und eine ausführbare Steuersoftware einschließt, die auf einem nicht vorübergehenden computerlesbaren Medium gespeichert sind, und wobei mindestens ein Teil der ausführbaren Steuerungssoftware ausgeführt wird, während die Nahfeldkommunikationsschnittstelle das erste Nahfeldkommunikationssignal empfängt.

6. Peripherievorrichtung nach Anspruch 1, ferner umfassend eine Speichervorrichtung (110), wobei die Steuerschaltung (120) die Konfigurationsdaten speichert, die im ersten Nahfeldkommunikationssignal in der Speichervorrichtung enthalten sind.

7. Peripherievorrichtung nach Anspruch 1, wobei die Steuerschaltung ohne die Nahfeldkommunikationsschnittstelle (130), die das erste Nahfeldkommunikationssignal empfängt, nicht mit Strom versorgt wird.

8. Nahfeldkonfigurationsvorrichtung, umfassend:
eine Nahfeldkommunikationsschnittstelle (130); und
eine Steuerschaltung (120) in Kommunikation mit der Nahfeldkommunikationsschnittstelle,
wobei die Steuerschaltung die Nahfeldkommunikationsschnittstelle anweist, ein erstes Nahfeldkommunikationssignal an eine verlagerte Peripherievorrichtung zu übertragen,
wobei das erste Nahfeldkommunikationssignal Strom zur Stromversorgung der verlagerten Peripherievorrichtung einschließt,
wobei das erste Nahfeldkommunikationssignal Konfigurationsdaten zum Konfigurieren der verlagerten Peripherievorrichtung einschließt,
wobei die Nahfeldkonfigurationsvorrichtung eine Softwareanwendung mit einem Sicherheitsmerkmal zum Beschränken des Zugriffs auf die verlagerte Peripherievorrichtung auf eine bestimmte Gruppe von Konfigurationsvorrichtungen nach der anfänglichen Konfiguration der verlagerten Peripherievorrichtung einschließt,
wobei die Steuerschaltung die Nahfeldkommunikationsschnittstelle anweist, ein zweites Nahfeldkommunikationssignal an die verlagerte Peripherievorrichtung zu übertragen, und
wobei das zweite Nahfeldkommunikationssignal Anweisungen für die verlagerte Peripherievorrichtung einschließt, Diagnoseinformationen bezüglich der verlagerten Peripherievorrichtung und deren Konfiguration an die Nahfeldkommunikationsschnittstelle zu übertragen.

9. Nahfeldkonfigurationsvorrichtung nach Anspruch 8, wobei das erste Nahfeldkommunikationssignal Strom zum Versorgen mindestens der Steuerschaltung (120) der verlagerten Peripherievorrichtung einschließt.

10. Nahfeldkonfigurationsvorrichtung nach Anspruch 9, wobei die Steuerschaltung (120) der verlagerten Peripherievorrichtung einen Mikrocontroller einschließt.

11. Nahfeldkonfigurationsvorrichtung nach Anspruch 9, wobei die Steuerschaltung (120) der verlagerten Peripherievorrichtung einen programmierbaren Prozessor (120) und eine ausführbare Steuersoftware einschließt, die auf einem nicht vorübergehenden computerlesbaren Medium gespeichert sind, und wobei das erste Nahfeldkommunikationssignal den Strom zur Stromversorgung für die Ausführung von mindestens einem Teil der ausführbaren Steuersoftware einschließt.

12. Nahfeldkonfigurationsvorrichtung nach Anspruch 8, wobei das erste Nahfeldkommunikationssignal Daten, Informationen oder Anweisungen der Peripherievorrichtung für die Konfiguration der verlagerten Peripherievorrichtung einschließt.

13. Nahfeldkonfigurationsvorrichtung nach Anspruch 9, wobei das erste Nahfeldkommunikationssignal eine oder mehrere Softwareanwendungen zum Speichern in einer Speichervorrichtung (110) der verlagerten Peripherievorrichtung einschließt.

## Revendications

1. Dispositif périphérique pour un système d'alarme incendie ou pour un système de sécurité, le dispositif périphérique comprenant :
une interface de communication en champ proche (130) ; et
des circuits de commande (120) du dispositif périphérique en communication avec l'interface de communication en champ proche,
l'interface de communication en champ proche recevant un premier signal de communication en champ proche,
les circuits de commande étant alimentés via une alimentation dans le premier signal de communication en champ proche,
les circuits de commande étant configurés via des données de configuration dans le premier signal de communication en champ proche,
le dispositif périphérique incluant une application logicielle dotée d'une caractéristique de sécurité permettant de limiter l'accès au dispositif périphérique à un groupe particulier de dispositifs de configuration suivant la configuration du dispositif périphérique,
l'interface de communication en champ proche recevant un second signal de communication en champ proche et
le second signal de communication en champ proche amenant les circuits de commande à transmettre des informations de diagnostic concernant les circuits de commande et leur configuration via l'interface de communication en champ proche.

2. Dispositif périphérique selon la revendication 1, comprenant en outre un dispositif d'affichage (140) permettant d'afficher un indicateur d'état de configuration.

3. Dispositif périphérique selon la revendication 2, dans lequel le dispositif d'affichage (140) inclut un dispositif d'affichage en papier électronique.

4. Dispositif périphérique selon la revendication 1, dans lequel les circuits de commande (120) incluent un microcontrôleur.

5. Dispositif périphérique selon la revendication 1, dans lequel les circuits de commande (120) incluent un processeur programmable (220) et un logiciel de commande exécutable stocké sur un support non transitoire lisible par ordinateur et dans lequel au moins une partie du logiciel de commande exécutable est exécutée pendant que l'interface de communication en champ proche reçoit le premier signal de communication en champ proche.

6. Dispositif périphérique selon la revendication 1, comprenant en outre un dispositif de mémoire (110), les circuits de commande (120) stockant les données de configuration contenues dans le premier signal de communication en champ proche dans le dispositif de mémoire.

7. Dispositif périphérique selon la revendication 1, dans lequel, si l'interface de communication en champ proche (130) ne reçoit pas le premier signal de communication en champ proche, les circuits de commande restent non alimentés.

8. Dispositif de configuration en champ proche comprenant :
une interface de communication en champ proche (130) ; et
des circuits de commande (120) en communication avec l'interface de communication en champ proche,
les circuits de commande ordonnant à l'interface de communication en champ proche de transmettre un premier signal de communication en champ proche à un dispositif périphérique déplacé,
le premier signal de communication en champ proche incluant une alimentation permettant d'alimenter le dispositif périphérique déplacé,
le premier signal de communication en champ proche incluant des données de configuration permettant de configurer le dispositif périphérique déplacé,
le dispositif de configuration en champ proche incluant une application logicielle dotée d'une caractéristique de sécurité permettant de limiter l'accès au dispositif périphérique déplacé à un groupe particulier de dispositifs de configuration suivant la configuration initiale du dispositif périphérique déplacé,
les circuits de commande ordonnant à l'interface de communication en champ proche de transmettre un second signal de communication en champ proche au dispositif périphérique déplacé et
le second signal de communication en champ proche incluant des instructions permettant au dispositif périphérique déplacé de transmette des informations de diagnostic concernant le dispositif périphérique déplacé et sa configuration à l'interface de communication en champ proche.

9. Dispositif de configuration en champ proche selon la revendication 8, dans lequel le premier signal de communication en champ proche inclut une alimentation permettant d'alimenter au moins des circuits de commande (120) du dispositif périphérique déplacé.

10. Dispositif de configuration en champ proche selon la revendication 9, dans lequel les circuits de commande (120) du dispositif périphérique déplacé comprennent un microcontrôleur.

11. Dispositif de configuration en champ proche selon la revendication 9, dans lequel les circuits de commande (120) du dispositif périphérique déplacé incluent un processeur programmable (120) et un logiciel de commande exécutable stocké sur un support non transitoire lisible par ordinateur et dans lequel le premier signal de communication en champ proche inclut l'alimentation permettant d'alimenter l'exécution d'au moins une partie du logiciel de commande exécutable.

12. Dispositif de configuration en champ proche selon la revendication 8, dans lequel le premier signal de communication en champ proche inclut des données, des informations ou des instructions de dispositif périphérique pour la configuration du dispositif périphérique déplacé.

13. Dispositif de configuration en champ proche selon la revendication 9, dans lequel le premier signal de communication en champ proche inclut une ou plusieurs applications logicielles pour le stockage dans un dispositif de mémoire (110) du dispositif périphérique déplacé.
